# EUROPÄISCHE PATENTSCHRIFT

(11) **EP 1 922 871 B1**
(45) Veröffentlichungstag und Bekanntmachung des Hinweises auf die Patenterteilung: **28.05.2014**
(21) Anmeldenummer: 06793306.9
(22) Anmeldetag: 07.09.2006
(51) Int. Cl.: H04N 7/025, H04J 3/00

(54) **ÜBERTRAGUNG VON NUTZDATEN IM BILDSIGNAL EINES KAMERASYSTEMS**
TRANSMISSION OF USEFUL DATA IN THE PICTURE SIGNAL OF A CAMERA SYSTEM
TRANSMISSION D'INFORMATIONS DANS LE SIGNAL VIDEO D'UN SYSTEME DE CAMERA

(30) Priorität: 09.09.2005 DE 102005042987
(43) Veröffentlichungstag der Anmeldung: 21.05.2008
(73) Patentinhaber: Hella KGaA Hueck & Co., 59552 Lippstadt (DE)
(72) Erfinder: ADAMECK, Markus, 59555 Lippstadt (DE); BÜSCHER, Ludwig, 33129 Delbrück (DE); CLAES, Peter, 59557 Lippstadt (DE)
(86) Internationale Anmeldenummer: PCT/EP2006/066108
(87) Internationale Veröffentlichungsnummer: WO 2007/028815

(56) Entgegenhaltungen:
- EP-A- 1 383 323
- EP-A- 1 715 688
- EP-A2- 1 510 439
- DE-A1- 10 133 600
- US-A- 4 218 697
- US-A- 4 636 858
- "FERNSEHBILDER ALS DATENTRAGER" FUNKSCHAU, WEKA FACHZEITSCHRIFTEN VERLAG, POING, DE, Bd. 60, Nr. 20, 23. September 1988 (1988-09-23), Seiten 32-36, XP000045248 ISSN: 0016-2841

## Beschreibung

### STAND DER TECHNIK

Die Erfindung betrifft die Übertragung von Informationen im Bildsignal eines Kamerasystems. Die Erfindung betrifft insbesondere eine Videokamera mit einem Bildaufnehmer zum Aufnehmen eines Bildes, insbesondere einem CCD-Bildaufnehmer oder einem CMOS-BildaufnehmerDie Erfindung betrifft ferner insbesondere eine Vorrichtung zum Empfangen und Verarbeiten von Bild- oder Videosignalen, die von Videokameras zur Verfügung gestellt werden.

Aus dem Dokument US 4 636 858 ist ein Verfahren bekannt, mit der von einem Bus eingelesene digitale Daten mit einem von einer Kamera gelieferten Videosignal gemischt werden können. Das Mischen findet außerhalb der Kamera statt. Die digitalen Daten werden in die nicht genutzten horizontalen Zeilen des Videosignals, der vertikalen Austastlücke eingefügt. Zum Lesen der digitalen Daten und kodieren der Daten in dem Videosignal ist eine der Videokamera nachgeordnete Einheit vorgesehen.

Aus dem Dokument EP 1 51 439 A2 ist ein Rückfahrassistenzsystem bekannt, welches eine Videokamera aufweist, mit welcher der rückwärtige Bereich eine Kraftfahrzeugs aufgenommen und über ein Bildschirm dargestellt werden kann. In das von dem Bildschirm dargestellte Bild können weitere Informationen eingeblendet werden. Diese Einblendungen werden von einem Steuergerät gesteuert.

Aus dem Dokument EP 1 383 323 A1 ist ein Verfahren zur Übertragung von Nicht-Video-Bilddaten über eine Video-Schnittstelle bekannt. Das Dokument beschreibt die Übertragung zwischen einer Sendereinheit an eine Empfängereinheit, insbesondere einer Zentraleinheit an ein Anzeigeinstrument eines Kraftfahrzeugsystems. Die Nicht-Video-Bilddaten werden gemäß dem in dem Dokument offenbarten Verfahren als Bilddaten codiert. Diese Bilddaten werden als Videosignal über eine Video-Schnittstelle übertragen. Dazu wird der sichtbare Bereich eines Videobildes genutzt. Es wird erwähnt, dass auch der nicht-sichtbare Bereich genutzt werden kann. Es wird in dem Dokument nicht beschrieben, dass die Sendereinheit das Videosignal aufnimmt, d.h. dass die Sendereinheit eine Videokamera ist. Die Beschreibung der Sendereinheit als Zentraleinheit und die Beschreibung eben dieser stellt klar, dass es sich bei der Zentraleinheit um ein Steuergerät im Sinne des vorgenannten Dokumentes EP 1 51 439 A2 handelt.

Die in den drei vorgenannten Dokumenten beschriebenen Verfahren und Anordnungen nutzen eine Einrichtung außerhalb der Videokamera zur Überlagern des von einer Videokamera erzeugten Videosignal mit Daten in einem sichtbaren oder nicht sichtbaren Bereich des Videosignals.

Aus der Druckschrift mit der Veröffentlichungsnummer US 5,949,331 und einer Vielzahl von anderen Druckschriften sind Kamerasysteme bekannt, bei denen das durch die digitale Videokamera aufgenommene Bild mit zusätzlichen grafischen Informationen überlagert werden kann. Die Überlagerung der aufgenommenen Bilder mit den zusätzlichen grafischen Informationen findet beispielsweise in Rückfahrkamerasystemen in Kraftfahrzeugen Verwendung. Mit diesen Rückfahrkamerasystemen kann der rückwärtige Bereich eines Kraftfahrzeugs aufgenommen und einem Kraftfahrzeugführer über ein Anzeigemittel dargestellt werden. Durch Überlagerung des aufgenommenen Bildes mit den grafischen Informationen kann beispielsweise dem Kraftfahrzeugführer bei gegebenem Lenkungseinschlag des Kraftfahrzeugs die Fahrtrichtung dargestellt werden, die das Kraftfahrzeug hat. Der Kraftfahrzeugführer kann dann, falls eine Kollision des Kraftfahrzeugs mit einem Hindernis droht, den Lenkungseinschlag entsprechend verändern. Dieses ist insbesondere beim Rückwärtsrangieren eines Kraftfahrzeugs hilfreich.

Derartige digitale Videokameras sind oft sehr klein und werden in großer Stückzahl den Herstellern von Rückfahrkamerasystemen zur Verfügung gestellt. In der Regel weisen diese Kameras nur eine Schnittstelle für das Bildsignal und einen Anschluss für die elektrische Energieversorgung der Kamera auf. Aus anderen Bereichen der Technik ist es bekannt Kameras mit weiteren Schnittstellen auszustatten, über die beispielsweise Diagnoseinformationen oder Seriennummern oder dergleichen abgefragt werden können. Das Vorsehen einer solchen zusätzlichen Schnittstelle ist jedoch aufwendig und daher nicht erwünscht. Dieses liegt zum einen daran, dass das Vorsehen der Schnittstelle selbst Kosten nach sich zieht. Die Schnittstelle muss aber darüber hinaus auch zum Beispiel über eine Anschlussleitung mit dem Gerät verbunden werden, welches die Informationen abfragen möchte. Auch hierzu ist ein zusätzlicher technischer Aufwand notwendig.

Hier setzt die vorliegende Erfindung an.

### VORTEILE DER ERFINDUNG

Der Erfindung liegt die Aufgabe zugrunde, eine Videokamera vorzuschlagen, bei der Informationen über die Kamera oder über das von der Kamera aufgenommene Bild übermittelt werden können ohne das hierzu eine besondere Schnittstelle notwendig ist.

Diese Aufgabe wird erfindungsgemäß dadurch gelöst, dass die Videokamera mit einem Mittel zum zeilenweisen Überlagern des aufgenommenen Bildes und mit einer Schnittstelle zum zeilenweisen Übertragen des mit den Informationen überlagerten aufgenommenen Bildes in Form eines Bild- oder Videosignals ausgestattet ist, und das Mittel zum Überlagern geeignet und eingerichtet ist, das aufgenommene Bild mit grafisch darstellbaren Informationen zu überlagern, wobei die grafisch darstellbaren Informationen Informationen umfassen, die nicht zur direkten grafischen Darstellung bestimmt sind und das aufgenommene Bild in einer vertikalen Austastlücke überlagern, wobei die nicht zur direkten grafischen Darstellungen bestimmten Informationen Informationen über die Videokamera (1) oder über das aufgenommene Bild sind.

Aus dem Stand der Technik, z. B. aus verschiedenen Fernsehnormen wie NTSC, PAL oder anderen, ist bekannt, dass von einem gesendeten Bild eines Bildsignals, das zeilenweise übertragen wird, einige gesendete Zeilen, üblicher Weise handelt es sich hierbei um die ersten 21 Zeilen, keine Bildinformationen enthalten, sondern vielmehr für Synchronisationszwecke und andere Zwecke genutzt werden. Die ersten 21 Zeilen des Bildsignals eines Bildes werden daher auch als vertikale Austastlücke bezeichnet. Gleichwohl kann mit dem Mittel zum Überlagern einer digitalen Videokamera der erfindungsgemäßen Art das aufgenommene Bild in den ersten Zeilen mit Informationen überlagert werden. Diese Informationen sind dann aber wegen der Nichtdarstellbarkeit der ersten 21 Zeilen eines Bildes mit üblichen Anzeigemitteln nicht direkt zur grafischen Darstellung bestimmt.

Die in diesen ersten Zeilen enthaltenen Informationen müssen vielmehr von einer Empfangs- und Verarbeitungsvorrichtung aus dem Bildsignal zurückgewonnen werden, wozu die Empfangs- und Verarbeitungsvorrichtung das Bildsignal auswertet. Die so gewonnenen nicht zur direkten grafischen Darstellung bestimmten Informationen können dann auch grafisch dargestellt werden. Die erfindungsgemäße Empfangs- und Verarbeitungsvorrichtung lässt das Bildsignal im Übrigen passieren, sodass es an einer Schnittstelle dieser Empfangs- und Verarbeitungsvorrichtung zur Darstellung mit einem Anzeigemittel wie einem Bildschirm zur Verfügung gestellt werden kann.

Eine erfindungsgemäße Videokamera weist vorteilhaft einen Speicher auf, in dem die Informationen gespeichert werden können. In diesem Speicher werden sowohl die Informationen gespeichert die Mittels eines Anzeigemittels zur Darstellung gebracht werden können als auch die Informationen die nicht zur grafischen Darstellung bestimmt sind. Der Speicher ist vorteilhaft wiederbeschreibbar, sodass die Informationen verändert werden können, die dem aufgenommenen Bild überlagert werden.

Vorteilhaft sind in dem zweiten und dem dritten Byte der ersten Zeile der nicht zur direkten grafischen Darstellung bestimmten Informationen Synchronisationsinformationen für die Empfangs- und Verarbeitungsvorrichtung und/oder das Anzeigemittel enthalten.

Vorteilhaft sind in einem vierten bis letzten Byte zumindest der ersten Zeile die nicht zur direkten grafischen Darstellung bestimmte Informationen über die Videokamera, wie zum Beispiel eine Seriennummer der Videokamera, das Produktionsdatum der Videokamera, Ergebnisse von internen Funktionsüberprüfungen der Videokamera, oder aber die nicht zur direkten grafischen Darstellung bestimmte Informationen über das aufgenommene Bild, wie zum Beispiel einer Belichtungszeit, einem Verstärkungsfaktor, einem Weißabgleichsparameter oder ähnlichen enthalten. Es kann dabei in dem vierten bis letzten Byte jeweils in einem Byte die Art der nicht zur direkten grafischen Darstellung bestimmten Informationen enthalten sein, während in dem jeweils folgendem Byte oder Bytes ein Wert enthalten ist.

Die erfindungsgemäße Videokamera kann in einer vorteilhaften Ausführung als äußere Anschlüsse lediglich die Schnittstelle für das Bild- oder Videosignal und einem Anschluss für eine elektrische Energieversorgung aufweisen.

Die nicht zur direkten grafischen Darstellung bestimmten Informationen sind vorzugsweise in der zehnten bis zur 21. Zeile enthalten.

### ZEICHNUNGEN

Ein Ausführungsbeispiel für ein Kamerasystem aus einer erfindungsgemäßen digitalen Videokamera und einer erfindungsgemäßen Verarbeitungsvorrichtung ist in der Zeichnung dargestellt. Es zeigt

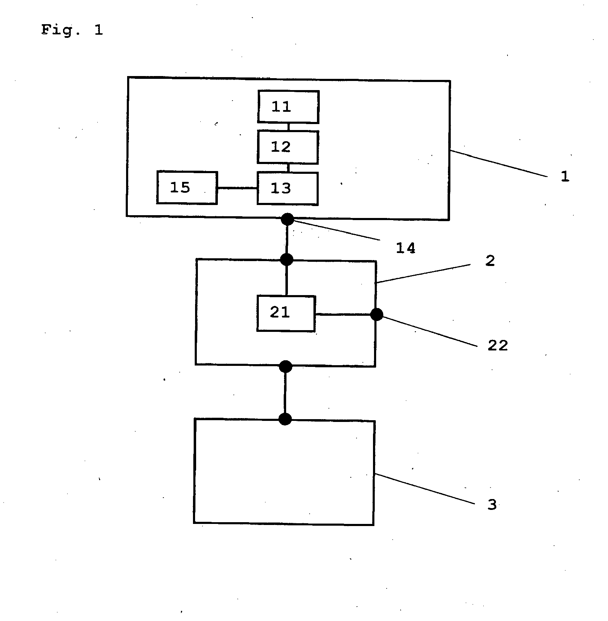

Fig. 1 Ein Blockfeldbild des Kamerasystems.

### BESCHREIBUNG DES AUSFÜHRUNGSBEISPIELS

Das in Fig. 1 dargestellte Kamerasystem umfasst eine digitale Videokamera 1 in erfindungsgemäßer Ausführung, eine Empfangs- und Verarbeitungsvorrichtung 2 in erfindungsgemäßer Ausführung und ein Anzeigemittel 3.

Die digitale Videokamera 1 umfasst eine nicht dargestellte Optik die in einer optischen Achse mit einem Bildaufnehmer 11 angeordnet ist. Bei dem Bildaufnehmer 11 handelt es sich vorzugsweise um einen CMOS Bildaufnehmer. In dem Bildaufnehmer 11 wird das Bild in ein elektrisches analoges Signal umgewandelt. Dieses analoge elektrische Signal wird vom Bildaufnehmer 11 an einen Analog-Digital-Wandler 12 gegeben. Das in dem Analog-Digital-Wandler 12 digitalisierte Signal enthält die Bildinformationen zeilenweise hintereinander angeordnet. Bei einem CMOS Bildaufnehmer 11 mit einer Auflösung von 510 Pixeln horizontal x 496 Pixeln vertikal entspricht dies 496 Zeilen mit jeweils 510 Spalten. Von diesem über den Bildaufnehmer 11 aufgenommenen und in dem A/D Wandler 12 digitalisierten Bild wird möglicherweise nur ein Teil dargestellt. Üblicherweise werden die ersten 21 Zeilen nicht dargestellt, da diese oftmals für die Synchronisation des Empfängers mit dem Bildsignal benötigt werden. Aus der Analogvideotechnik sind diese Zeilen daher als vertikale Austastlücke bekannt.

Das durch den A/D Wandler 12 digitalisierte von dem Bildaufnehmer 11 aufgenommene Signal wird in bekannter Art und Weise in einem Mittel 13 zum zeilenweise Überlagern des aufgenommenen Bildes mit grafisch darstellbaren Informationen überlagert. Das mit den grafisch darstellbaren Informationen überlagerte Bild bzw. Bildsignal kann an einer Schnittstelle 14 der digitalen Videokamera 1 abgegriffen werden. Die Informationen, mit denen das von dem Bildaufnehmer 11 aufgenommene Bild durch das Mittel 13 zum zeilenweisen Überlagern überlagert wird, werden dem Mittel 13 durch einen Speicher 15, vorzugsweise in Form eines EEPROM, zur Verfügung gestellt. In dem Speicher ist in linenkodierter Form hinterlegt, ob das Bild überlagert wird. Die Informationen sind zeilenweise entsprechend der Zeilenzahl des aufgenommenen Bildes hinterlegt. Eine 1 an der entsprechenden Stelle einer Zeile bedeutet, dass an dieser Stelle aufgenommene Bild einen festen vorgegebenen Farbwert erhält, der z. B. in einem Speicher wie einem EEPROM abgespeichert sein kann. Steht stattdessen eine 0 an der entsprechenden Stelle einer Zeile bleibt der Farbwert und Helligkeitswert des aufgenommenen Punktes unverändert.

Da die ersten 21 Zeilen des jeweiligen Bildes nicht zur Darstellung vorgesehen sind, werden in dem Speicher 15 für die Informationen bisher keine Informationen hinterlegt mit denen das aufgenommene Bild überlagert wird. Erfindungsgemäß ist jedoch vorgesehen, dass insbesondere in der ersten Zeile zwar grafisch darstellbare Informationen jedoch nicht zur direkten grafischen Darstellung bestimmte Informationen abgelegt werden. Diese nicht zur grafischen Darstellung bestimmten Informationen müssen vielmehr aus dem Bildsignal herausgefiltert und von dem Empfangs- und Verarbeitungsmittel 2 so aufbereitet werden, dass diese an dessen Schnittstelle 22 abgefragt werden können. Zur Gewinnung der nicht zur grafischen Darstellung bestimmten Informationen weist das Empfangs- und Verarbeitungsmittel 2 ein Mittel 21 zum Gewinnen der nicht zur Darstellung bestimmten Informationen aus dem Bildsignal auf.

## Patentansprüche

1. Videokamera (1) mit einem Bildaufnehmer (11) zum Aufnehmen eines Bildes,
**dadurch gekennzeichnet,**
**dass** die Videokamera
- mit einem Mittel (13) zum zeilenweisen Überlagern des aufgenommenen Bildes und
- mit einer Schnittstelle (14) zum Übertragen des mit den Informationen überlagerten aufgenommenen Bildes in Form eines Bildsignals
ausgestattet ist,
**dass** das Mittel (13) zum Überlagern geeignet und eingerichtet ist, das über die Videokamera (1) aufgenommene Bild mit grafisch darstellbaren Informationen zu überlagern, wobei die grafisch darstellbaren Informationen Informationen umfassen, die nicht zur direkten grafischen Darstellung bestimmt sind und das aufgenommene Bild in einer vertikalen Austastlücke überlagern, wobei die nicht zur direkten grafischen Darstellung bestimmten Informationen Informationen über die Videokamera (1) oder über das aufgenommene Bild sind.

2. Videokamera nach Anspruch 1, **dadurch gekennzeichnet, dass** die Videokamera (1) einen Speicher (15) zum zeilenweisen Speichern der Informationen aufweist.

3. Videokamera nach Anspruch 2, **dadurch gekennzeichnet, dass** der Speicher (15) wiederbeschreibbar ist.

4. Videokamera nach einem der Ansprüche 1 bis 3, **dadurch gekennzeichnet, dass** in einem zweiten und in einem dritten Byte der ersten Zeile nicht zur direkten grafischen Darstellung bestimmten Synchronisationsinformationen enthalten sind.

5. Videokamera nach einem der Ansprüche 1 bis 4, **dadurch gekennzeichnet, dass** die nicht zur direkten grafischen Darstellung bestimmten Informationen in einem vierten bis letzten Byte der ersten Zeile enthalten sind und dass die nicht zur direkten grafischen Darstellung bestimmten Informationen über die Videokamera (1) eine Seriennummer, das Produktionsdatum, Ergebnisse von Funktionsüberprüfungen, und die nicht zur direkten grafischen Darstellung bestimmten Informationen über das aufgenommene Bild eine Belichtungszeit, ein Verstärkungsfaktor, ein Weißabgleichsparameter sind.

6. Videokamera nach Anspruch 5, **dadurch gekennzeichnet, dass** in dem vierten bis letzten Byte jeweils in einem Byte die Art der nicht zur direkten grafischen Darstellung bestimmten Informationen enthalten und in dem jeweils folgenden Byte oder Bytes ein Wert enthalten ist.

7. Videokamera nach einem der Ansprüche 1 bis 6, **dadurch gekennzeichnet, dass** die Videokamera (1) nur die Schnittstelle (14) und einen Anschluss für eine elektrische Energieversorgung als äußere Anschlüsse aufweist.

8. Videokamera nach einem der Ansprüche 1 bis 7, **dadurch gekennzeichnet, dass** in der ersten bis zur 21. Zeile nicht zur direkten grafischen Darstellung bestimmten Informationen enthalten sind.

9. Kamerasystem mit einer Videokamera nach einem der Ansprüche 1 bis 8 und einer Vorrichtung zum Empfangen und Verarbeiten von Bildsignalen (Empfangs- und Verarbeitungsvorrichtung 2), **dadurch gekennzeichnet, dass** die Empfangsvorrichtung- und Verarbeitungsvorrichtung (2) geeignet und eingereichtet ist, ein Bildsignal der Videokamera (1) zu Empfangen und zum Gewinnen der zur direkten grafischen Darstellung bestimmten Informationen zu Verarbeiten.

10. Kamerasystem nach Anspruch 9, **dadurch gekennzeichnet, dass** die Empfangsvorrichtung- und Verarbeitungsvorrichtung (2) ein Mittel (21) zum Gewinnen der nicht darstellbaren Informationen aus dem Bildsignal aufweist, welches zum Auslesen der vierten bis letzten Bytes der ersten Zeile eines in dem Bildsignals enthaltenes Bildes geeignet und eingerichtet ist.

## Claims

1. Video camera (1) comprising a picture recorder (11) for the recording of a picture,
**Characterized in that**
The video camera is equipped
- with a means (13) for a line-by-line overlay of the recorded picture and
- with an interface (14) for the transmission of the recorded picture overlaid with the information in the shape of a picture signal,
That the means (13) for overlaying is suitable and equipped for overlaying the picture recorded with the video camera (1) with graphically representable information, wherein the graphically representable information comprises information which is not intended for direct graphical representation and which overlays the recorded picture in a vertical blanking interval, wherein the information not intended for direct graphical representation is information on the video camera (1) or on the recorded picture.

2. Video camera according to Claim 1, **characterized in that** the video camera (1) comprises a memory (15) for the line-by-line storage of the information.

3. Video camera according to Claim 2, **characterized in that** the memory (15) is re-writable.

4. Video camera according to one of the Claims 1 to 3, **characterized in that** a second and a third byte in the first line contains synchronization information not intended for direct graphical representation.

5. Video camera according to one of the Claims 1 to 4, **characterized in that** the information not intended for direct graphical representation is contained in a fourth to a last byte in the first line and that the information not intended for direct graphical representation relating to the video camera (1) is a serial number, the manufacturing date, results of function checks, and the information not intended for direct graphical representation relating to the recorded picture are an exposure time, a gain factor and a white balance parameter.

6. Video camera according to Claim 5, **characterized in that** in the fourth to the last byte, one byte contains the type of the information not intended for direct graphical representation and the following byte or bytes contain a value.

7. Video camera according to one of the Claims 1 to 6, **characterized in that** the video camera (1) comprises only the interface (14) and a connection for an electric power supply as external connections.

8. Video camera according to one of the Claims 1 to 7, **characterized in that** in the first to the 21st line contain information not intended for direct graphical representation.

9. Camera system comprising a video camera according to one of the Claims 1 to 8 and a device for the receiving and processing of picture signals (receiving and processing device 2) **characterized in that** the receiving and processing device (2) is suitable and equipped for receiving a picture signal of the video camera (1) and for processing it to obtain the information intended for direct graphical representation.

10. Camera system according to Claim 9, **characterized in that** the receiving device and processing device (2) is a means (21) to obtain the non-representable information from the picture signal, which is suitable and equipped for the reading out of the fourth to the last byte of the first line of a picture contained in the picture signal.

## Revendications

1. Caméra vidéo (1) avec un enregistreur d'images (11) pour enregistrer une image,
**caractérisée en ce**
**que** la caméra vidéo est équipée
- d'un moyen (13) pour superposer l'image enregistrée ligne par ligne et
- d'un interface (14) pour transmettre l'image enregistrée superposée par des informations sous forme d'un signal d'image,
**que** le moyen (13) pour superposer est approprié et configuré à superposer l'image enregistrée par la caméra vidéo (1) avec des informations graphiquement représentables, les informations graphiquement représentables comprenant des informations qui ne sont pas destinées à la représentation graphique directe et qui superposent l'image enregistrée dans un intervalle de suppression vertical, les informations non destinées à la représentation graphique directe sont des informations sur la caméra vidéo (1) ou sur l'image enregistrée.

2. Caméra vidéo selon la revendication 1, **caractérisée en ce que** la caméra vidéo (1) présente une mémoire (15) pour l'enregistrement des informations ligne par ligne.

3. Caméra vidéo selon la revendication 2, **caractérisée en ce que** la mémoire (15) est réinscriptible.

4. Caméra vidéo selon l'une des revendications 1 à 3, **caractérisée en ce qu'**un deuxième et un troisième octet de la première ligne contiennent des informations de synchronisation non destinées à la représentation graphique directe.

5. Caméra vidéo selon l'une des revendications 1 à 4, **caractérisée en ce que** les informations non destinées à la représentation graphique directe sont contenues au quatrième jusqu'au dernier octet de la première ligne et que les informations non destinées à la représentation graphique directe sur la caméra vidéo (1) sont un numéro de série, la date de fabrication, les résultats des essais fonctionnels et les informations non destinées à la représentation graphique directe sur l'image enregistrée sont le temps d'exposition, un facteur d'amplification et un facteur de balance de blanc.

6. Caméra vidéo selon la revendication 5, **caractérisée en ce qu'**au quatrième jusqu'au dernier octet un octet contient chaque fois le type des informations non destinées à la représentation graphique directe et l'octet suivant ou les octets suivants contiennent une valeur.

7. Caméra vidéo selon l'une des revendications 1 à 6, **caractérisée en ce que** la caméra vidéo (1) ne présente que l'interface (14) et une connexion pour une alimentation électrique en tant que connexions extérieures.

8. Caméra vidéo selon l'une des revendications 1 à 7, **caractérisée en ce que** la première jusqu'à la 21^{ème} ligne contient des informations non destinées à la représentation graphique directe.

9. Système de caméra avec une caméra vidéo selon l'une des revendications 1 à 8 et un dispositif pour recevoir et traiter des signaux d'image (dispositif de réception et de traitement 2) **caractérisé en ce que** le dispositif de réception et de traitement (2) est approprié et configuré à recevoir un signal d'image de la caméra vidéo (1) et à le traiter pour obtenir les informations destinées à la représentation graphique directe.

10. Système de caméra selon la revendication 9, **caractérisé en ce que** le dispositif de réception et de traitement (2) présente un moyen (21) pour obtenir les informations non représentables du signal d'image qui est approprié et configuré à lire le quatrième au dernier octet de la première ligne d'une image contenue au signal d'image.
